# EUROPEAN PATENT APPLICATION

(11) **EP 0 849 482 A2**
(43) Date of publication of application: **24.06.1998**
(21) Application number: 97850178.1
(22) Date of filing: 18.12.1997
(51) Int. Cl.: F16C 33/48

(54) **Roller cage for a roller bearing and a method and device for mounting such a roller cage**

(30) Priority: 20.12.1996 SE 9604809
(71) Applicant: SKF MEKAN AB, S-641 21 Katrineholm (SE)
(72) Inventor: Persson, Stig, 641 35 Katrineholm (SE); Axelsson, Uno, 641 35 Katrineholm (SE)
(74) Representative: Westman, P. Börje I.

(57) **Abstract**

A roller cage (8), a method of mounting it and a device for accomplishing the method for a double row spherical roller bearing (1) of the type having an annular body portion and a number of prongs (9) projecting from said body portion in both axial directions, and each adjacent pair of such prongs (9) forming between themselves and the wall of the body portion a cage pocket adapted to accommodate one spherical roller (7) each, wherein the body part of the cage (8) is formed integral with a guide ring (10) guiding and keeping the rollers of the adjacent rows of rollers apart.

## Description

The present invention refers to a cage for a double-row spherical roller bearing and also to a method for mounting said cage in the bearing and a device or tool for accomplishing said mounting.

Roller bearings of this type have an outer race ring with a common sphered raceway and an inner race ring with two slightly spaced apart raceways inclined at an angle to the bearing axis and to each other. Between these raceways are provided two rows of symmetrical, sphered rollers, which in each row are spaced apart and retained in the bearing by means of a cage. Such cages have different designs, mainly depending on bearing size and intended load, and are either in form of an individual pressed steel cage for each row of rollers or - for larger bearings - a machined one-piece cage, common to both rows of rollers and with double prongs for accommodating the rollers.

The two rows of rollers are guided by a guide ring centred between the rollers either on the inner race ring or on the cage. These guide rings are pressed from steel blanks or manufactured as sintered steel rings.

These types of cages and guide rings give a satisfactory bearing operation and can be manufactured and mounted with automated equipment, in spite of the fact that they require accurate manufacturing of one or two cage bodies and one guide ring and careful calibration of the cage pockets relative to the rollers for giving adequate roller guidance and reducing friction.

The purpose of the present invention is to provide a novel roller cage having an ability of guiding and retaining the rollers when these are sphering out and simultaneously giving each and every roller an individual clearance adaptation, and this has been obtained by the features defined in the accompanying claim 1.

The invention also refers to a method for mounting such a roller cage and a device for accomplishing such mounting and these aspects of the invention are defined in the accompanying claims 5 and 10.

Hereinafter the invention will be further described with reference to a non-limiting embodiment shown in the accompanying drawings.
Fig. 1 shows a cross section through a portion of a double-row spherical roller bearing with a roller cage in accordance with the present invention.
Fig. 2 is a corresponding view showing schematically a step in the assembly of such a bearing.
Fig. 3 is a view showing a bearing with a cage of the type referred to under mounting in a schematically shown device as claimed in the application.
Fig. 4 is a view showing schematically a quarter of the roller circle, with some cage prongs illustrated between some rollers.
Fig. 5 is a schematical perspective view of a portion of the mounting device, and
Fig. 6 and 7 show each a section of the cage according to the invention before and after the mounting operation.

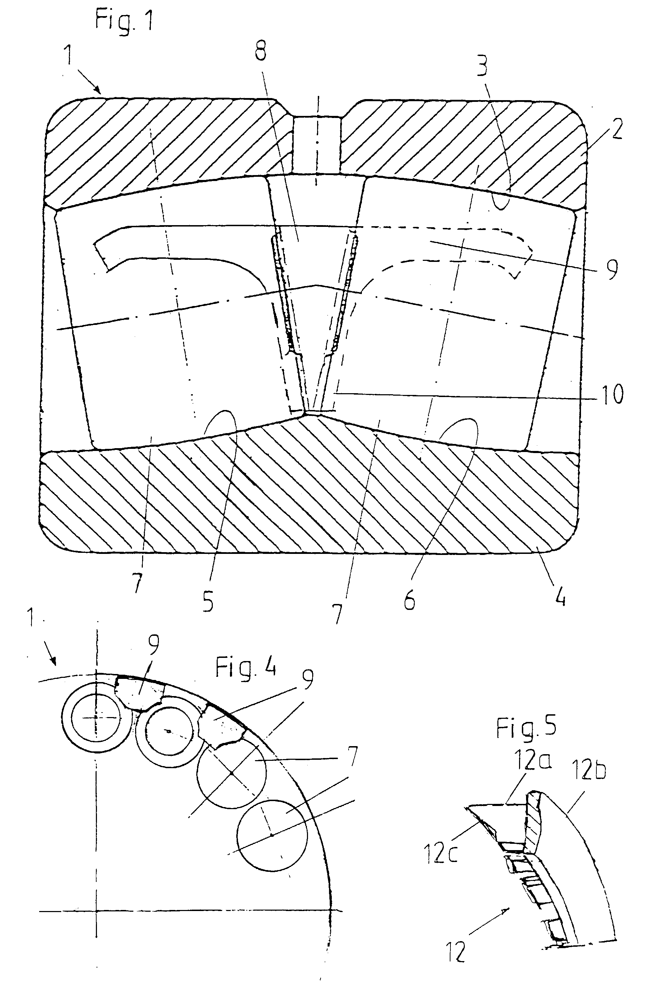

In Fig. 1 is shown in cross section a portion of a spherical double-row roller bearing 1, having an outer race ring 2 with an internal common sphered raceway 3, and an inner race ring 4 provided inside the outer race ring and having two external raceways 5, 6 both being inclined to the bearing axis and relative to each other.

Between these raceways 3 and 5, 6 are disposed two rows of symmetrical spherical rollers 7 having substantially the same radius of curvature as the raceways.

The bearing also has a cage 8 having a number of double prongs 9 provided to retain the rollers in the bearing. The bearing in normal manner also has a guide ring 10, which is provided for guiding the rollers thus that the rollers of the different rows are prevented from contacting each other. According to this invention the guide ring 10 is made in one piece with the cage 8. The combined cage 8 and guide ring 10 is preferably manufactured from sinter steel.

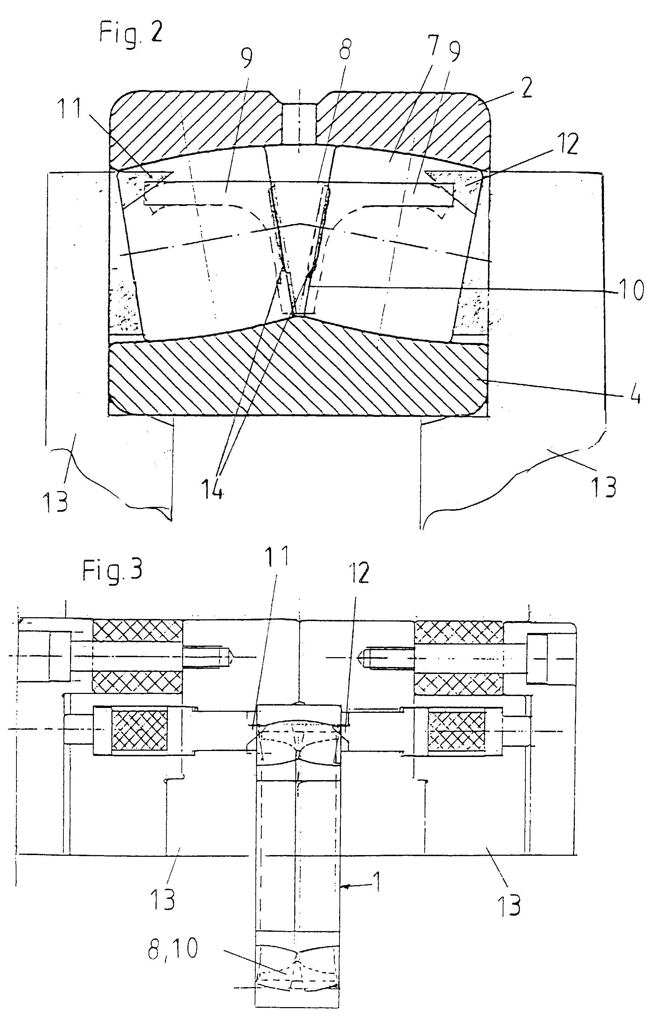

In Fig.2 is very schematically shown in a view corresponding to Fig. and in reduced scale how the bearing outer race ring 2 and the inner race ring 4 have been positioned in a schematically shown device or tool, in the figure represented by two intimated, upsetting members 11, 12 and their associated driving dies 13. The prongs 9 of the combined cage 8 and guide ring 10 in this initial stage of the mounting are substantially parallel to the axis of the bearing, as shown in continuous lines, thereby permitting easy insertion of the rollers 7 between the prongs 9 from opposite sides of the cage member. When all rollers 7 thus are positioned between their associated pairs of prongs 9 the two upsetting members 11, 12 are moved by the dies 13 towards each other, thereby causing the prong ends to bend downward thus that the ends of the prongs, as shown in dash lines, are arranged in positions guiding and retaining the rollers 7 also when the set of rollers are sphered out.

During this prong end bending operation the upsetting members 11, 12 also will press against the outwardly directed roller ends, thereby pressing the rollers 7 inwardly to a certain extent and thereby causing the rollers with their inwardly directed ends to form individual embossed surfaces 14 at the bottom of each cage pocket between the prongs.

Fig. 3 shows more in detail a device adapted for accomplishing the method for mounting the roller cage according to the invention, wherein the ends of the prongs of the combined cage 8 and guide ring 10 of the bearing are being bent downwards to guiding and retaining positions, at the same time as the pocket bottoms between each two adjacent prongs are being embossed by intermediary of just the roller, which has been inserted in that specific cage pocket, whereby each cage pocket will have its own embossed surface adapted to the roller enclosed in that cage pocket.

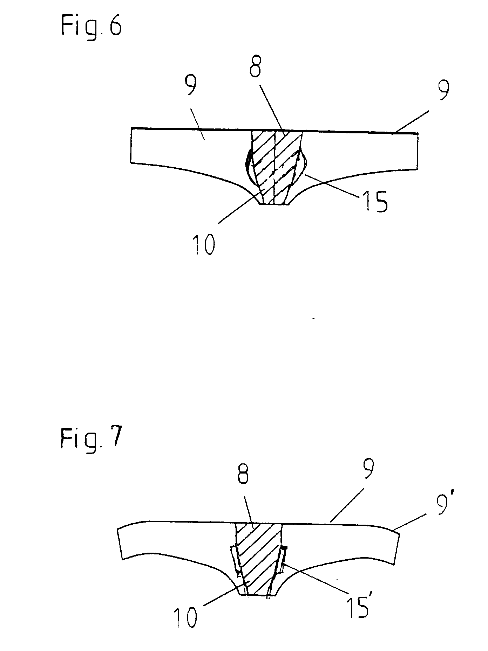

Fig. 4 shows an end view of a quarter of the roll circle of the bearing 1, wherein some rollers 7 and the prongs 9 between them are illustrated.

Fig. 5 illustrates in perspective a portion of an upsetting member 12, which as can be seen is provided with a number of pointed pressure heads 12a projecting from an annular base body 12b, the pressure head 12a having an inclined surface 12c pressing against the cage prong end at the upsetting operation.

Fig. 6 and Fig. 7 show a cross section through the cage 8 in stages before and after it has been subjected to the upsetting and embossing operations in accordance with the method incorporated in the application. Thus in Fig. 6 the prongs 9 of the cage 8 are substantially straight and the intermediate body portion of the combined cage 8 and guide ring 10 have a slightly convex shape 15, whereas the prong ends 9 as shown in Fig. 7, after the upsetting operation have been bent downwards 9', and the surface of the base part of the cage and the guide ring have been provided with embossed surfaces 15', which are individually formed after each associated roller and which provide calibration and also improve the ability for the cage of holding lubricant for the roller. The embossements 15' contact the roller end in a manner not further shown at positions offset from the centre of the rollers.

The invention is not limited to the embodiment shown and described but modifications and variants are possible within the scope of the appended claims.

## Claims

1. A roller cage (8) for a double row spherical roller bearing (1) of the type having an annular body portion and a number of prongs (9) projecting from said body portion in both axial directions, and each adjacent pair of such prongs (9) forming between themselves and the wall of the body portion a cage pocket adapted to accommodate one spherical roller (7) each,
**characterized therein**
that the body part of the cage (8) is formed integral with a guide ring (10) guiding and keeping the rollers of the adjacent rows of rollers apart.

2. A roller cage as claimed in claim 1,
**characterized therein**,
that the prongs (9) of the cage at their ends facing away from the body part of the cage have downwardly bent portions (9').

3. A roller cage as claimed in any of the proceeding claims,
**characterized therein**,
that the surface (15) of the body part of the cage (8) has embossements (15') adapted to the roller housed in that particular cage pocket.

4. A roller cage as claimed in anyone of claims 1-3,
**characterized therein**,
that the combined roller cage (8) and guide ring (10) is made in one piece from sinter steel.

5. A method for mounting a roller cage in a double row spherical roller bearing (1) such as claimed in claim 1, incorporating the following steps:
positioning an outer race ring (2) in a mounting device,
positioning an inner race ring (4) coaxially inside the outer race ring,
inserting in the annular space between the two race rings (2, 4)_{,} an annular cage member (8) having a central body portion and a number of equally spaced apart prongs (9) projecting axially therefrom in opposite axial directions, each two adjacent prongs (9) extending in the same axial direction forming between them a roller pocket,
inserting from opposite axial directions a barrel-shaped roller (7) in each such roller pocket,
**characterized in**
pressing upsetting members (11,12) provided in said mounting device substantially axially against the free ends of the said prongs (9), thereby causing the prong ends (9') to bend to positions guiding and retaining the rollers in the bearing.

6. A method as claimed in claim 5,
**characterized in**
using upsetting members (12) having pointed pressure heads (12a) projecting from an annular base body (12b), each pressure head (12a) having an inclined surface (12c) pressing against the cage prong end at the upsetting operation.

7. A method as claimed in claim 5 or 6,
**characterized in**
applying on each roller (7) in said cage pockets a substantially axial pressure force, causing the roller end facing the surface of the cage body portion, which constitutes the bottom (15) of the cage pocket, to provide an embossed area (15') in the cage pocket bottom.

8. A method as claimed in anyone of claims 5-7,
**characterized in**
using a roller cage (8) manufactured from sinter steel.

9. A method as claimed in anyone of claims 5-8
using a cage member (8) formed integrally with a guide ring (10) for guiding and spacing apart the rollers (7) of the different rows of rollers.

10. A device for mounting a roller cage in a double row spherical roller bearing (1) such as claimed in claim 1, using the steps claimed in claim 5,
**characterized therein,**
that the device incorporates means for retaining the bearing race rings in mounting position, and movable upsetting members (11,12) coupled to pressure means arranged to move the upsetting members reciprocally between positions outside the side faces of the bearing and positions within the bearing and in deforming contact with prongs (9) provided on the cage member (8) of the bearing and projecting in both axial directions.
